# EUROPEAN PATENT APPLICATION

(11) **EP 4 020 917 A1**
(43) Date of publication of application: **29.06.2022**
(21) Application number: 20217169.0
(22) Date of filing: 23.12.2020
(51) Int. Cl.: H04L 29/08, H04L 29/06, H04W 12/08

(54) **DISTRIBUTED LEDGER ARRANGEMENT FOR SUPPORTING SERVICE TRANSACTIONS IN AN INDUSTRIAL SYSTEM**

(71) Applicant: ABB Schweiz AG, 5400 Baden (CH)
(72) Inventor: LOCHER, Thomas, 8050 Zürich (CH)
(74) Representative: Kransell & Wennborg KB

(57) **Abstract**

A distributed ledger arrangement (110) for supporting service transactions in an industrial system (150) comprises: a plurality of nodes (111) of a network (112), each configured to maintain a distributed ledger copy; a plurality of machine-to-ledger interfaces (120), each configured to receive, from a device (Ri, R2, SP1, TBi) acting as service provider and/or service consumer in the industrial system, service condition inquiries and requests to record transactions; and one or more manager-to-ledger interfaces (130), each configured to receive, from a device owner (131) authorized to specify service conditions with effect on the devices, requests to record service conditions.

## Description

### TECHNICAL FIELD

The present disclosure relates to the automation of industrial service applications and, in particular, to an arrangement for supporting service transactions among connected devices in an industrial system.

### BACKGROUND

The advent of Internet-of-Things (IoT) connectivity and autonomous industrial systems may disruptively increase figures-of-merits such as productivity, quality, robustness and consistency of the output in the near future. At the same time, this development brings about new challenges in terms of device and transaction management. Available management solutions are not designed for - and may not adequately support - the multiplication of direct (ad-hoc, machine-to-machine) interactions of numerous networked devices in an industrial system. These shortcomings may be felt as lacking scalability, transparency and performance.

The available solutions are typically highly centralized and rigid. For example, a fleet of robots is programmed to carry out a certain task, controlled and supervised by a central management system. A change in the task requires the reprogramming of the robots. While this paradigm currently works well, a different approach will be needed in the future when numerous flexible IoT devices from various manufacturers are allowed to interact in a largely autonomous manner. Most management systems in use today do not offer the scalability and interoperability required in such a scenario.

### SUMMARY

One objective of the present disclosure is to enable the direct execution of automated services among machines. Another objective is to provide a medium allowing the parties to share and maintain their service conditions, service contracts, and transaction history in a scalable and transparent manner. A further objective is to propose a method of performing a service transaction in an industrial system.

These and other objectives are achieved by the invention according to the independent claims. The dependent claims are directed to advantageous embodiments of the invention.

According to a first aspect of the invention, there is provided a distributed ledger (DL) arrangement for supporting service transactions in an industrial system. The arrangement comprises a plurality of nodes of a network, each configured to maintain a distributed ledger copy. It further comprises a plurality of machine-to-ledger interfaces and one or more manager-to-ledger interfaces. Each machine-to-ledger interface is configured to receive, from a device acting as service provider and/or service consumer in the industrial system, service condition inquiries and requests to record transactions in the DL. Each manager-to-ledger interface is configured to receive, from a device owner authorized to specify service conditions with effect on the devices, requests to record service conditions in the DL.

A novel and non-obvious application of blockchain technology, the DL arrangement according to the first aspect can act as an enabler for a high degree of automation in industrial service applications. This may result in faster and less costly execution in the industrial system that the DL arrangement supports. The near real-time recording of service transactions makes it possible for invested parties (e.g., companies) to see at all times how many services they have provided and consumed, which can be translated directly into financial performance numbers. Thus, detailed and up-to-date financial information is available at any time and is no longer restricted to slow channels such as quarterly statistics. Finally, the scalability and transparency of the DL arrangement have the potential to create new industrial IoT business opportunities.

More specifically, the transparency is achieved because a party (service provider and/or consumer) can inspect the ledger and get an up-to-date view on all relevant transactions. The scalability is made possible thanks to the absence of a central entity burdened with the management of an increasing number of devices. Interoperability is a consequence of all parties using the same DL arrangement to communicate and may do so in a coherent manner. Finally, performance increases since service providers and consumers can interact directly and via the DL in a largely automated manner. In general terms, the addition of a DL underpinning endows the industrial system with a scalable, auditable backbone for machine-to-machine transactions, enabling (business) monitoring in near real time at low cost.

According to a second aspect of the invention, there is provided a method of performing a service transaction in an industrial system supported by a DL. The method comprises the following steps, which may be overlapping in time and/or performed in a partially different order: in response to a request by an authorized device owner of a first device acting as service provider in the industrial system, recording a service condition relating to the first device in the distributed ledger; in response to a request by an authorized device owner of second device acting as service consumer in the industrial system, recording a service condition relating to the second device in the distributed ledger. These initial steps may be performed in a preliminary phase, separated in time from the subsequent steps and by different entities. The method further comprises: transferring a device-to-device message with a service request from the second device to the first device; processing a service condition inquiry to the distributed ledger, wherein the inquiry is from the first device and relates to a service condition with effect on at least the first device itself; transferring a device-to-device message with a service request reply from the first device to the second device; transferring a device-to-device message with a service order from the second device to the first device, wherein the ordered service is to be provided by the first device for the benefit of the second device. Here, the device-to-device messages need not pass through the DL but may be conveyed by a different communication medium. The method further comprises, in response to a request by the first device, recording a transaction corresponding to the ordered service in the distributed ledger.

The service transaction method according to the second aspect shares the advantages transparency, scalability, interoperability and/or excellent performance with the first aspect.

According to a third aspect of the invention, there is provided a method of operating a service-provider device in an industrial system supported by a DL. This method comprises: receiving a service request from a service-consumer device in the industrial system; submitting a service condition inquiry to the distributed ledger, wherein the inquiry relates to a service condition with effect on at least the device itself; sending a service request response to the service-consumer device; receiving a service order from the service-consumer device, wherein the ordered service is to be provided for the benefit of the service-consumer device; and submitting a request for recordation in the distributed ledger of a transaction corresponding to the ordered service.

This way of operating the service-provider device offers, like the first aspect of the invention, prominent transparency, scalability, interoperability and/or performance.

According to a fourth aspect, there is provided a computer program containing instructions for causing a computer - or in particular one or more devices in the industrial system - to carry out one of the above methods. The computer program may be stored or distributed on a data carrier. As used herein, a "data carrier" may be a transitory data carrier, such as modulated electromagnetic or optical waves, or a non-transitory data carrier. Non-transitory data carriers include volatile and non-volatile memories, such as permanent and non-permanent storage media of magnetic, optical or solid-state type. Still within the scope of "data carrier", such memories may be fixedly mounted or portable.

As used in this disclosure, a "distributed ledger" (DL) may be a type of ledger that is shared, replicated, and synchronized in a distributed and decentralized manner. A DL may be understood as an instance of the architecture described in Technical Specification FG DLT D3.1 "Distributed ledger technology reference architecture" issued on 1 August 2019 by the Telecommunication Standardization Sector of the International Telecommunication Union (ITU-T). The terminology of the present disclosure is intended to be coherent with the Technical Specification FG DLT D1.1 "Distributed ledger technology terms and definitions" issued on 1 August 2019 by the same body.

The term "industrial system" may refer to an industrial production or manufacturing system, a centralized or distributed industrial control system, a mechanical or chemical processing system, an energy generation system, and other collections of interrelated industrial devices.

As used herein, furthermore, a "service condition" with effect on at least one device in the industrial system may include a permission to provide a service to another device in the industrial system, a permission to request a service from another device in the industrial system; a constraint on providing such service, a constraint on requesting such service (service constraint), a compensation schedule specifying the compensation to be paid by the service-consuming device to the service-providing device in exchange for a provided service; a balance of credits to be used for said compensation.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

### BRIEF DESCRIPTION OF THE DRAWINGS

Aspects and embodiments are now described, by way of example, with reference to the accompanying drawings, on which:
figure 1 shows an industrial system supported by a DL arrangement;
figure 2 is a sequence diagram showing messages exchanged among devices in an industrial system, owners of the devices and a supporting DL arrangement; and
figure 3 shows an industrial control system supported by a DL arrangement.

### DETAILED DESCRIPTION

The aspects of the present disclosure will now be described more fully hereinafter with reference to the accompanying drawings, on which certain embodiments of the invention are shown. These aspects may, however, be embodied in many different forms and should not be construed as limiting; rather, these embodiments are provided by way of example so that this disclosure will be thorough and complete, and to fully convey the scope of all aspects of invention to those skilled in the art. Like numbers refer to like elements throughout the description.

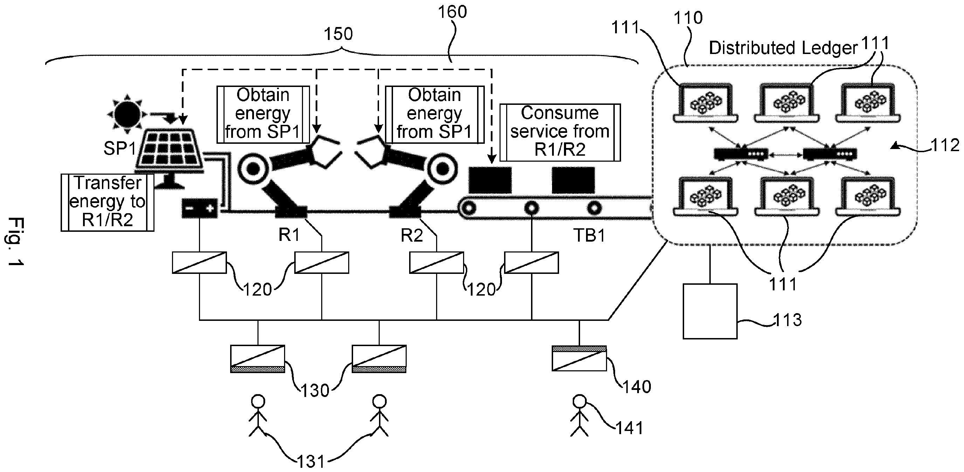

The left half of figure 1 illustrates an industrial system 150 including devices such as an electric power plant SP1, electrically powered robot manipulators R1, R2 and a conveyor TBi. Further examples include a camera, a drone, a signalprocessing component, a machine-learning component offering a prediction functionality; these devices may not be directly involved in physical handling, yet they do provide and/or consume services to or from other devices in the system 150. The industrial system 150 may for example be an industrial production system. The number of devices is a full-scale industrial system 150 may be several orders of magnitude greater than depicted in figure 1.

As indicated on the plaques with double vertical edges in figure 1, the participation of the devices SP1, R1, R2, TB1 in the industrial system 150 may be modeled as a mutual exchange of services. Each of the devices SP1, R1, R2, TBi may be a service provider, a service consumer or may have both roles. For example, the power plant SP1 may be understood as a provider of electric energy to the robot manipulators R1, R2 and conveyor TB1. Conversely, the robot manipulators R1, R2 and conveyor TBi act as service consumers in relation to the power plant SP1. The conveyor TBi may be seen to consume or purchase, from any of the robot manipulators R1, R2, the articles which the robot manipulators R1, R2 load onto it. In more service-oriented language, the loading of articles may be understood as a replenishment service provided by the robot manipulators R1, R2. Depending on circumstances, it may be equally suitable to model the action of the conveyor TBi as a transportation service consumed by the robot manipulators R1, R2. The modeling can vary within wide limits as long as it is accepted and found agreeable by the owners or managers of the devices in the industrial system 150. The modeling may be fixed in such manner that it is seen to reflect the financial reality of the activities (e.g., production, processing, generating) performed. The modeling may in particular include a compensation scheme that is perceived as fair and that incentivizes the stakeholders in a balanced and universally fruitful way.

The right-hand section of figure 1 shows a distributed ledger (DL) arrangement 110 comprising a network infrastructure 112 (e.g., switches, routers, connection lines, interfaces) connecting a number of nodes 111 which each maintain a copy of the DL. Preferably, the network infrastructure 112 connects all the nodes 111 to each other. Each node 111 node could either be a computer, server, or storage device. Three modalities of nodes can exist: block-producing validating nodes, non-block producing full validating nodes, and partial/light nodes. A block-producing full validating node participates in a consensus process and contains an entire replica of the distributed ledger, including every transaction that has been executed since its inception. A non-block-producing full validating node does not participate in a consensus process and contains an entire replica of the distributed ledger, including every transaction that has been executed since its inception. A partial or light node contains only a partial transaction list but must be connected in some way to a full node to make sure that their data is accurate and useful. The DL arrangement 110 may be permissioned or permissionless or a combination (hybrid) of these. In a permissionless DL, anyone can create a node 111, but each node 111 should be able to provide adequate processing power and storage capacity. The more nodes 111 there are on the network 112, the more likely it is to be well distributed among varied stakeholders, thus resulting in a lower risk of fraud, error or system failure.

Key characteristics of the DL include Append-Only (full transactional history is retained, no transactions and values are overwritten), Immutability (crypto-graphically secure and immutable, thereby tamper-proof and attestable), Shared (the ledger is shared among multiple nodes) and Distributed (ensuring scalability, wherein a larger number of nodes makes consensus protocol more resilient to attacks). A consensus mechanism of the DL includes rules and procedures by which the nodes 111 agree on validating transactions. Two categories of consensus process, both of which are potentially useful in implementations of the aspects disclosed herein when the DL arrangement 110 is permissionless, are proof of work (PoW) and proof of stake (PoS). In permissioned DL arrangements 110, which are considered to have more potential in (industrial) business applications, a more efficient approach may be to run a distributed agreement protocol among the well-defined permissioned parties. The fact that no single entity has the power to manage the DL arrangement 110 on its own is congenial with the autonomous behaviour of the IoT-connected devices SP1, R1, R2, TB1 of the industrial system 150 and promotes the objectives noted initially.

As shown in figure 1, the DL arrangement 110 further comprises multiple types of interfaces. A first type is the machine-to-ledger interface 120, over which the devices SP1, R1, R2, TB1 may interact with the DL by submitting to it requests, inquiries and the like. Each machine-to-ledger interface 120 is configured to receive, from a device R1, R2, SP1, TB1 acting as service provider and/or service consumer in the industrial system 150, service condition inquiries and requests to record transactions. The transactions may indicate initiation, progress or completion of a service. Alternatively, or additionally, a transaction may indicate a compensation to be transferred in recognition of a provided service. Manager-to-ledger interfaces 130 form a second type. Each of these is configured to receive, from a device owner 131 who/which is authorized to specify service conditions with effect on the devices, requests to record one or more such service conditions. As an optional third interface type, the DL arrangement 110 may include an inspection interface 140 configured to allow a third party 141 to inspect one of the distributed ledger copies. While illustrated in differentiated form in figure 1, the machine-to-ledger interface 120, manager-to-ledger interface 130 and inspection interface 140 may have overlapping or even identical structure and capabilities.

As an optional feature in the case where the DL is of the permissioned or hybrid type, the machine-to-ledger interfaces 120 or manager-to-ledger interfaces 130, or both, are configured to restrict access to ledger data related to other devices or other device owners. In a permissioned DL, more precisely, only authorized nodes are maintaining the distributed ledger, and this makes it possible to restrict read access and to restrict who can issue transactions. This way, the DL arrangement 110 may apply privacy-preserving methods to protect user data, which enables parties to verify information pertaining to their activities without revealing detailed, potentially private information about transactions between other parties. Privacy-preserving methods exist for permissionless DL arrangements as well.

As briefly mentioned above, each of the service conditions may include a permission to provide a service to another device in the industrial system 150, a permission to request a service from another device in the industrial system 150; a constraint on providing such service, a constraint on requesting such service (service constraint), a compensation schedule specifying the compensation to be paid by the service-consuming device to the service-providing device in exchange for a provided service; an (optionally timestamped, dated) balance of credits to be used for said compensation. The balance may be an initial value applying at a specified point in time, i.e., before compensations have been exchanged with other devices of the industrial system 150.

A party A who/which acts as device owner or device manager can store *service conditions* on the DL, which describe an authorization list for each of its devices or device families. The party A may be a human operator, company, machine-learning agent, other stakeholder or stakeholder representative. Alternatively, the party A referred to herein may be a delegate who has been appointed by an original device owner. As an example of delegation, the original device owner may have ceded part of its authority (e.g., the authority to enter into agreements regarding service conditions) to a local controller associated with the device or to processing resources in the device itself. An authorization list may specify which devices or device families are authorized to request the service(s) of this device. Rather than merely specifying the binary information whether or not a device (or device family) is allowed to request a service, it can contain fine-grained access control with tunable compensation for its service:
- The authorization list can specify which specific task or basic operation a particular device (or device family) can request. A basic operation can be moving a robot arm, or a conveyor belt, whereas a specific task might be more complex and comprise numerous basic operations, e.g., welding two metal pieces together or packaging some goods.
- The authorization list can specify the compensation for each task or basic operation for each device (or device family) separately. The compensation can be specified in terms of fractions of a real currency or virtual credits that are acquired by the individual parties to enable its devices to consume services. For continuous operations such as the rotation of wheels or cyclic robot arm movement, the requested compensation can be stated per revolution or distance covered in space. Since the compensation can be specified for each device (or device family) separately, a particular task or operation may be free for some devices but incur some costs for other devices.

On the consumer side, a party B (e.g., operator, company, machine-learning agent, other stakeholder or stakeholder representative) can store *service constraints* on the distributed ledger. In this disclosure including the claims, service constraints are understood as a special case of service conditions. The service constrains may also specify authorization lists for each device (or device family). By contrast, these authorization lists specify which services can be requested from which devices or device families and how much the device is allowed to invest, e.g., specifying the number of times it can request a service or how many credits it can spend in total. It is possible for party B to replenish the virtual investment capital by updating authorization lists in its service constraints.

Naturally, while in principle service conditions and service constraints enable detailed control, it is possible to specify fairly unrestricted access. In the simplest case, the same service may simply be offered by an entire device family, e.g., a certain class of robots, to any device at a fixed compensation. Likewise, a device may be allowed to request a service from certain devices without restrictions, e.g., when the corresponding parties have higher-level service-level agreements in place.

The DL arrangement 110 may further support so-called smart contracts, executing certain pieces of code directly in the distributed ledger and thereby pushing automation further. Accordingly, as shown in figure 1, the DL arrangement 110 may comprise, as an optional component, a contract mechanism 113 configured to monitor compliance with the service conditions and/or to enforce the service conditions. The service conditions may be provided in the form of a smart contract, i.e., a program written on a DL system which encodes the rules for specific types of distributed DL system transactions in a way that can be validated and/or triggered by specific conditions. A contract engine (not shown) may execute the contract code and maintain the contract data according to the contract code.

Conceptually, the described components of the DL arrangement 110 may be considered to operate on top of the DL itself. The components allow parties to define dynamically adaptable service conditions for devices offering services and service constraints for devices consuming services. The devices then interact directly based on these conditions and constraints, and carry out the negotiated service actions. The transaction results are then again captured in the distributed ledger as a permanent record for the involved parties. In the DL, the transactions may be captured as a time-stamped list of activities. The activities may be chronologically sorted, sorted by device or by device owner. Information regarding the involved parties (device owners), service-provider devices and service-consumer devices is included in the DL. A transaction may optionally be signed by each involved party, to allow any third party to verify that the involved parties agreed to the transaction. In addition to the transactions, the DL may include up-to-date balances of credits for such devices which are involved in exchange of compensations; such balances may form part of service constraints in the sense explained above. The data structure to be used for the DL may be designed in view of requirements such as auditability, inspectability, robustness, read or write speed, traceability etc. and their relative weights in the use case at hand.

The industrial system 150 may optionally include a communications network 160 configured to transfer device-to-device messages. The communication network 160 may be at least partially independent of the distributed ledger arrangement as far as hardware, network infrastructure and/or execution is concerned. For example, the communication network 160 may be capable of transferring the device-to-device messages without passing via the DL. A device-to-device message may be a service request, a service request response, a service order, a service status report, a service completion report or combinations of these.

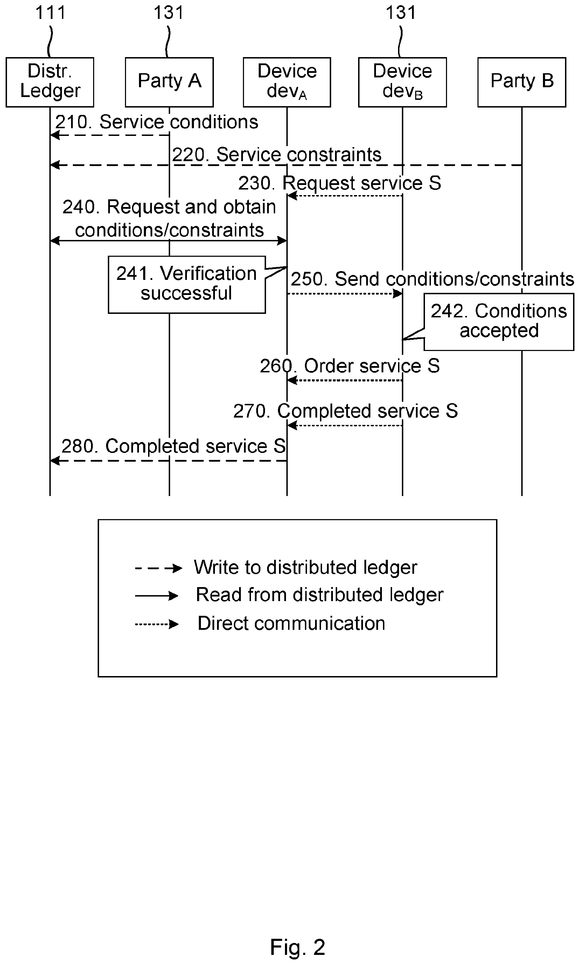

Figure 2 illustrates the basic process of acquiring a service. The process begins with device owner A storing its service conditions in the DL. Actual legal ownership of a device devA (which may be one of the example devices R1, R2, SP1, TBi shown in figure 1 or other devices) is not required for being a "device owner" in this sense; what matters it that party A according to the DL is authorized to specify service conditions for device devA, From the point of view of the DL, the act of storing entails, in response to a request 210 by an authorized device owner A of the first device devA acting as service provider in the industrial system 150, recording a service condition relating to the first device in the DL. The device owner A may choose to submit the request to any of the nodes 111 holding a DL copy, preferably one which acts as a block-producing validating node. The service condition may supersede an older service condition for device devA, even though the older service condition stays in the DL for traceability purposes.

Similarly, device owner B stores its service constraints (a type of service condition) in the distributed ledger. The DL, in response to a request 220 by an authorized device owner B of second device devB acting as service consumer in the industrial system 150, recording a service condition relating to the second device in the distributed ledger.

A service request 230 concerning a service S is transferred from the second device devB. Either the service request 230 is recorded in the DL - which may support an auction-like bidding procedure as explained below - or the service request 230 is transferred as a device-to-device message directly to an intended service provider device devA, e.g., using the communication network 160.

Device dev_{A} acquires the latest service conditions, which device owner party A has had deposited in the DL, and the service constraints for party B, verifies their compatibility in the sense that dev_{B} is entitled to request service S. Accordingly, the DL processes a service condition inquiry 240 to the distributed ledger. The inquiry is from the first device devA and relates to a service condition with effect on at least the first device itself. Depending on the rules configured for the DL, the DL may accept to process service condition inquiries even if they relate to further devices than the inquiring one.

If the verification is successful 241, the first (service-provider) device devA sends the relevant parts to the second (service-consumer) device dev_{B}. Alternatively, it sends a pointer to the relevant parts in the distributed ledger to the second device dev_{B} so that the second device dev_{B} can obtain the information from the ledger itself. This may be achieved by transferring a device-to-device message with a service request reply 250 from the first device devA to the second device devB.

If the second device dev_{B} accepts the service condition 242, it sends a service order to the first device dev_{A}, which carries out the service. As shown in figure 2, the service order 260 maybe transferred as a device-to-device message from the second device devB to the first device devA, wherein the ordered service is to be provided by the first device for the benefit of the second device.

At the end, the first and/or second devices dev_{A}, dev_{B} confirm the completion of the service action in the distributed ledger. The DL, in response to a request 280, records a transaction corresponding to the ordered service. If the request 280 for recordation is submitted by the first device devA, it may be conditional upon the first device devA having received a device-to-device message with a service status report 270 from the second device devB.

It is noted that the initial requests 210, 220 may be performed in a preliminary phase, which may be separate in time from the subsequent sequence of messages beginning with the service request 230. Similarly, the subsequent sequence of messages may be repeated without repeating the initial requests 210, 220; in other words, the service conditions deposited in the DL may apply for a large number of service transactions.

In a variation of the embodiment shown in figure 2, the process may include an auction. More precisely, the service request 230 may be placed in the distributed ledger, which gives many or all service-provider devices the opportunity to compete for the order to be placed by the second device devB. In particular, the placing of the service request 230 in the DL may incentivize the device owners of the industrial system 150 to update the service conditions for one or more of their devices such as to be in a better condition for winning the auction. Device-to-device messages may be transferred to the second device devB from the participating service-provider devices responding to the service request 230. The device or devices of party B, which are to receive the service, can then select the most suitable device from all devices offering the requested service based on a suitable criterion. For example, the selection may consider the requested compensation, proximity of the devices providing the service, or other metrics.

The present disclosure further provides a method of operating a service-provider device devA in an industrial system 150 supported by a distributed ledger 110. This method is illustrated in figure 2 together with some messages that are only indirectly related to the device devA. The device devA executes the method by: receiving a service request 230 from a service-consumer device devB in the industrial system 150; submitting a service condition inquiry 240 to the distributed ledger, wherein the inquiry relates to a service condition with effect on at least the device devA itself; sending a service request response 250 to the service-consumer device devB; receiving a service order 260 from the service-consumer device devB, wherein the ordered service is to be provided for the benefit of the service-consumer device devB; and submitting a request 280 for recordation in the distributed ledger of a transaction corresponding to the ordered service. The request for recordation 280 may be conditional upon the first device devA having received, from the service-consumer device devB, a service status report 270 relating to the ordered service.

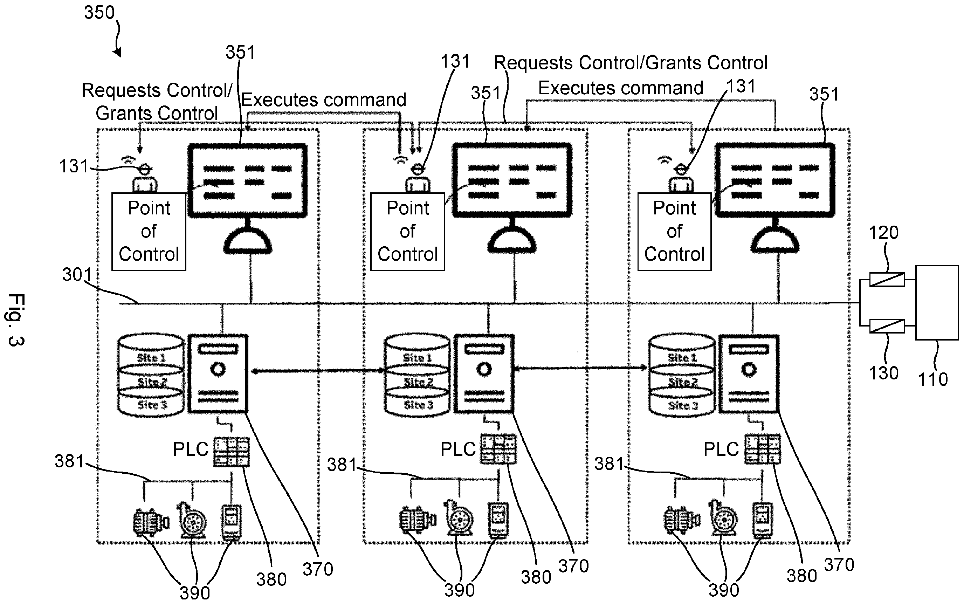

As another example of an industrial system, figure 3 shows a water distribution network 350, which includes a number of connected water pumping stations 390. The operation of the water pumping stations 390 is under the direct control of local programmable logic controllers (PLCs) 380, each of which is associated with a smaller group of pumping station equipment, such as pumps, valves, piping, reservoirs. Each PLC 380 is, in turn, associated with a supervisory control and acquisition (SCADA) server 370. The SCADA servers 370 are adapted for supervisory data collection in industrial automation. The SCADA 370 servers can communicate over a system-wide communications network 301, to which are furthermore connected a number of multiple operator interfaces 351 and a distributed ledger arrangement 110.

The topology shown in figure 3 enables real-time monitoring of the water pumping stations 390, whereas the issuing of process commands, such as adjusting setpoints of PLC 380, are handled by the intermediary of the SCADA servers 370. The subordinated operations including the execution of real-time control logic and controller calculations, are performed by the networked PLCs 380, which maintain a plurality of downlinks towards field sensors and actuators installed in the water pumping stations 390. The SCADA paradigm therefore provides remote access to the local PLCs 380.

As suggested by the three dotted frames in figure 3, there is one operator interface 351 for each PLC 380. Before any delegation or exchange of temporary control privileges, the operator interface 351 is authorized to control only the water pumping equipment 390 below its own PLC 380. The operator interface 350 may have read access to the other PLCs 380. In the illustrated water pumping system 350, typically, an operator 131 needs to request, from an operator in another pumping station, a (temporary) control privilege to initiate certain operations of the same water distribution network 350, such as a one-off transfer of an amount of stored water between reservoirs. The exchange of control privileges is conventionally handled by a manual function (e.g., Point of Control) responsible for bookkeeping, rule enforcement etc., but is here supported by the DL arrangement 110. This allows the water pumping system 350 to operate autonomously or with a reduced amount of human intervention.

The temporary awarding of command power (or control privileges) in the water pumping system 350 illustrates an important special case of service conditions and service constraints. Command power may correspond to a voluntary hierarchic relationship between two devices or device levels, which comes into being after the higher level has requested, from the lower level, permission to exert power over the lower level, and the lower level has granted such permission. A handshake procedure may be used to request and grant the command power. The data exchange between the higher and lower level may be documented by the DL arrangement 110, which may then be referred to as a watchdog. The current command power currently awarded in an industrial system may be indicated to operators or provided on request from the DL arrangement 110. The example of water transfer between reservoirs has already been mentioned. In another example, a maintenance agent may temporarily be granted command power over a water pumping station 390 - in addition to the local operator interface 351 or in its stead - which is then returned after completion of the maintenance. The requesting, awarding and returning of the command power are all recorded in the DL arrangement 110.

Figure 3 shows a system where each SCADA server 370 can act as a service-provider device, a service-consumer device or both. The service conditions and service constraints have effect on the SCADA servers 370, and only indirectly influence the water pumping equipment 390. The operator interfaces 351 may be understood as device owners in the sense of the appended claims. Accordingly, as shown in the example of figure 3, the DL arrangement 110 may be connected to the communications network 301 via one machine-to-ledger interface 120 for communicating with the SCADA servers 370 and one manager-to-ledger interface 130 for communicating with the operator interfaces 351.

The aspects of the present disclosure have mainly been described above with reference to a few embodiments. However, as is readily appreciated by a person skilled in the art, other embodiments than the ones disclosed above are equally possible within the scope of the invention, as defined by the appended patent claims.

## Claims

1. A distributed ledger arrangement (110) for supporting service transactions in an industrial system (150), the arrangement comprising:
a plurality of nodes (111) of a network (112), each configured to maintain a distributed ledger copy;
a plurality of machine-to-ledger interfaces (120), each configured to receive, from a device (R1, R2, SP1, TB1) acting as service provider and/or service consumer in the industrial system, service condition inquiries and requests to record transactions; and
one or more manager-to-ledger interfaces (130), each configured to receive, from a device owner (131) authorized to specify service conditions with effect on the devices, requests to record service conditions.

2. The distributed ledger arrangement of claim 1, wherein each of the manager-to-ledger interfaces is configured to receive a request to record a service condition indicating one or more of:
a permission to request a service, optionally with constraints;
a permission to provide a service, optionally with constraints;
a service constraint;
a permission to access information;
a service compensation schedule applicable between a pair of devices;
a device's balance of compensation credits.

3. The distributed ledger arrangement of claim 1 or 2, wherein each of the manager-to-ledger interfaces is configured to receive a request to record a service condition with effect on a class of devices, a family of devices, or a predefined group of the devices in the industrial system.

4. The distributed ledger arrangement of any of the preceding claims, further comprising:
a contract mechanism (113) configured to monitor compliance with the service conditions and/or to enforce the service conditions.

5. The distributed ledger arrangement of any of the preceding claims, wherein each of the machine-to-ledger interfaces is configured to receive a request to record a transaction indicating one or more of:
initiation, progress or completion of a service;
compensation for a provided service.

6. The distributed ledger arrangement of any of the preceding claims, which implements permissioned distributed ledger technology.

7. The distributed ledger arrangement of claim 6, wherein the machine-to-ledger and/or manager-to-ledger interfaces are configured to restrict access to ledger data related to other devices or other device owners.

8. The distributed ledger arrangement of any of the preceding claims, which implements permissionless distributed ledger technology.

9. The distributed ledge arrangement, further comprising:
an inspection interface (140) configured to allow a third party (141) to inspect one of the distributed ledger copies.

10. An industrial system (150) comprising:
the distributed ledger arrangement (110) of any of the preceding claims;
said plurality of devices (Ri, R2, SP1, TBi) acting as service provider and/or service consumer in the industrial system; and
a communications network (160) configured to transfer device-to-device messages, wherein the communications network is independent of the distributed ledger arrangement.

11. The industrial system of claim 10, wherein the device-to-device messages are one or more of: a service request, a service request response, a service order, a service status report, a service completion report.

12. A method of performing a service transaction in an industrial system (150) supported by a distributed ledger (110), the method comprising:
in response to a request (210) by an authorized device owner (A) of a first device (devA) acting as service provider in the industrial system, recording a service condition relating to the first device in the distributed ledger;
in response to a request (220) by an authorized device owner (B) of second device (devB) acting as service consumer in the industrial system, recording a service condition relating to the second device in the distributed ledger;
transferring a service request (230) from the second device;
processing a service condition inquiry (240) to the distributed ledger, wherein the inquiry is from the first device and relates to a service condition with effect on at least the first device itself;
transferring a device-to-device message with a service request reply (250) from the first device to the second device;
transferring a device-to-device message with a service order (260) from the second device to the first device, wherein the ordered service is to be provided by the first device for the benefit of the second device;
in response to a request (280) by the first device, recording a transaction corresponding to the ordered service in the distributed ledger.

13. The method of claim 12, wherein the service request (230) from the second device is made available in the distributed ledger to a plurality of service-provider devices in the industrial system, the method further comprising:
transferring device-to-device messages to the second device from any one the service-provider devices responding to the service request.

14. A method of operating a service-provider device (devA) in an industrial system (150) supported by a distributed ledger (110), the method comprising:
receiving a service request (230) from a service-consumer device (devB) in the industrial system;
submitting a service condition inquiry (240) to the distributed ledger, wherein the inquiry relates to a service condition with effect on at least the device itself;
sending a service request response (250) to the service-consumer device;
receiving a service order (260) from the service-consumer device, wherein the ordered service is to be provided for the benefit of the service-consumer device; and
submitting a request (280) for recordation in the distributed ledger of a transaction corresponding to the ordered service.

15. The method of claim 14, wherein the request for recordation is conditional upon having received, from the service-consumer device, a service status report (270) relating to the ordered service.
